Europäisches Patentamt

European Patent Office

Office européen des brevets

(11) Publication number: **0 520 528 A1**

# EUROPEAN PATENT APPLICATION

(21) Application number: **92201465.9**

(22) Date of filing: **22.05.92**

(51) Int. Cl.5: **G01N 27/406**

(30) Priority: **10.06.91 US 712366**

(43) Date of publication of application:
**30.12.92 Bulletin 92/53**

(84) Designated Contracting States:
**DE FR GB**

(71) Applicant: **GENERAL MOTORS CORPORATION**
**General Motors Building 3044 West Grand**
**Boulevard**
**Detroit Michigan 48202(US)**

(72) Inventor: **Hrinevich, John, Jr.**
**5152 Sunlyn Street**
**Grand Blanc, MI 48439(US)**

(74) Representative: **Haines, Arthur Donald et al**
**Patent Section 1st Floor Gideon House 28**
**Chapel Street**
**Luton, Bedfordshire LU1 2SE(GB)**

(54) **Electrochemical-type exhaust gas oxygen sensor having improved metal to ceramic seal.**

(57) An improved sealing means (12) is provided for sealing a solid electrolyte ceramic body (14) within a metal housing (30) for use in an oxygen sensing device (10) which is suitable for detecting the oxygen concentration within automotive exhaust gases emitted from an internal combustion engine. A relatively thick annular member (12) is provided between the ceramic body (14) and the metal housing (30). The material of this annular member (12) is chosen so as to have a higher thermal coefficient of expansion than the ceramic body (14) and metal housing (30) being sealed, and is preferably an appropriate austenitic stainless steel. Thus, when the sealed area is heated, the annular member (12) expands more than the ceramic body (14) and the metal housing (30), thereby retaining the sealed area in compression and effectively sealing the ceramic body (14) from entry of unwanted exhaust gases into its reference air chamber (16).

FIG.1

The present invention generally relates to methods for manufacturing a metal and ceramic assembly, such as an electrochemical-type solid electrolyte oxygen sensor which is suitable for detecting oxygen concentrations in automotive exhaust emitted from an internal combustion engine. More specifically, this invention relates to an oxygen sensor of this type which is characterized by an improved seal between the ceramic solid electrolyte body and the metal housing that supports that solid electrolyte body, wherein this improved seal retains its sealing integrity over a broad range of operating temperatures.

Gas sensors are employed in a variety of applications requiring qualitative and quantitative gaseous determinations. In the automotive industry, it is well-known that the oxygen concentration in the automobile exhaust has a direct relationship to the engine air-to-fuel ratio. Oxygen gas sensors are employed within the automobile internal combustion control system to provide accurate exhaust gas oxygen concentration measurements for determination of optimum combustion conditions, maximization of efficient fuel usage, and management of exhaust emissions.

Generally, the electrochemical type of oxygen sensor employed in automotive applications utilizes a thimble-shaped, ceramic, electrochemical galvanic cell to determine, or sense, the relative amounts of oxygen present in the exhaust stream, an example being disclosed in U.S. Patent No. 3,844,920 (Burgett et al). This type of oxygen sensor is generally known and used throughout the automotive industry, and comprises an ionically-conductive solid electrolyte, ceramic material which is typically yttria-stabilized zirconia; a porous electrode coating on the exterior of the solid electrolyte exposed to the exhaust gas to be measured; and a porous electrode coating on the interior of the solid electrolyte exposed to a known concentration of reference gas.

The gas concentration gradient across the solid electrolyte produces a galvanic potential which is related to the differential of the partial pressures of the gas at the two electrodes by the Nernst equation: $E = AT[\ln(P_1/P_2)]$, where E is the galvanic voltage, T is the absolute temperature of the gas, $P_1/P_2$ is the ratio of the partial pressures of the reference gas at the two electrodes, and $A = R/4F$, where R is the universal gas constant and F is the Faraday constant. Thus, the oxygen sensing device determines the oxygen concentration in the exhaust gas by measuring this galvanic potential generated between the reference and measuring electrodes.

For proper operation of the sensor, it is imperative that the reference and measuring electrodes be exposed only to the gaseous source for which they are to determine the corresponding partial pressure. Accordingly the reference electrode must be sealed from external leaks, so as to be exposed only to the reference gas. However, in practice this seal is difficult to achieve due to the various materials which must be joined together, and is even more difficult to maintain due to the diverse thermal expansion characteristics of the materials, particularly as the sensor is cycled over a broad temperature range which is typical in an automotive environment.

The shortcomings associated with this critical seal primarily arise because of the techniques used to assemble the sensor, wherein the zirconia ceramic sensing element is mounted and sealed within a metal housing which is typically stainless steel. It is very difficult to obtain an absolute seal between the ceramic sensing element and the metal housing, due to the different properties of the two materials. Yet, for proper operation of this type of oxygen sensor, an absolute seal is required so as to prevent leakage of the exhaust gases into the air reference chamber (and correspondingly to the reference electrode) of the ceramic sensing element. In addition, the integrity of this seal must be strictly maintained over a wide range of temperatures.

Various means have been employed in the past, most of which utilize some type of spring member to achieve the requisite gas-tight seal between the ceramic sensing element and the metal housing. A common practice has been to place a spring member inside the metal housing near the region where the hot exhaust gases flow, typically between an insulator and the positive electrical contact on the ceramic sensing element. This design requires a spring material which can tolerate the high temperatures experienced as the exhaust gases flow over the solid electrolyte body. Such materials are relatively expensive and do not provide optimum spring properties. Furthermore, such an arrangement generally subjects the spring member to extremely high loading forces during assembly of the components, resulting in a significant loss of its spring force.

Alternatively, a spring member has been provided away from the extremely hot section of the sensor assembly where the exhaust gases flow. However, although this design permits the use of less costly materials for the spring member, it is still required that the full assembly force be applied to the spring member, thereby again diminishing the spring force of the member and correspondingly reducing its sealing effectiveness.

Also, the use of a yieldable material, such as talc or mica, has been introduced between the two components, so that upon exposure to changes in temperatures the yielding material will deform to fill any irregularities between the components thereby maintaining an effective seal. However, the shortcomings associated with these types of materials are that they are characterized by limited resilience and correspondingly fail to provide the requisite force also required to rigidly secure the components within each other.

Lastly, another common method has been to heat a localized area of the metal housing with an electrical current and then to upset the housing. As the heated shell cools, the metal contracts, causing the ceramic element to be held in compression and causing a seal to be formed. The difficulty with this type of seal is that, as the device is used at elevated temperatures, the metal expands more than the ceramic member, thus reducing the compressive load and destroying the seal.

Therefore, it would be desirable to provide a means for sealing the ceramic body within the metal housing within these types of oxygen sensors which avoids the shortcomings of the prior art. More particularly, the sealing means must be capable of retaining a high-quality seal over a wide range of temperatures. It would also be desirable if such a means for sealing these components was also readily amenable to automotive production techniques.

It is therefore an object of this invention to provide a means for sealing a solid electrolyte, ceramic body within a metal housing which supports such a ceramic body, that is particularly adaptable for use in an oxygen sensing device.

It is a further object of this invention that such an improved seal between the ceramic body and the metal housing be effective over a broad range of operating temperatures.

Lastly, it is still a further object of this invention that such an improved seal be compatible with, and readily adaptable to, current automotive production techniques.

In accordance with a preferred embodiment of this invention, these and other objects and advantages are accomplished as follows.

According to the present invention, there is provided an improved means for sealing a solid electrolyte, ceramic body within a metal housing especially for use in an oxygen sensing device which is suitable for detecting the oxygen concentration within automotive exhaust gases emitted from an internal combustion engine.

Generally, an oxygen sensing device has a substantially tubular, solid electrolyte, ceramic sensing element which is rigidly fixed within a metal housing. The solid electrolyte body has an elongated bore located axially, with a first end closed by the solid electrolyte material and an open second end. A reference electrode is provided on the inner surface of the solid electrolyte body and a measuring electrode is provided on the outer surface. The metal housing supports the solid electrolyte body so that the measuring electrode of the solid electrolyte body contacts the external gas to be measured and so that the reference electrode is essentially gas-tight to the external gas to be measured. The oxygen partial pressure of the exhaust gas is determined by measuring the galvanic potential generated between the reference and measuring electrodes.

According to a preferred aspect of this invention a means for effecting an improved, high-quality seal between the solid electrolyte ceramic body and the metal housing is provided, wherein this improved seal effectively maintains its integrity over a broad range of temperatures. This is accomplished by providing a relatively thick annular member having a hollow cross-section, between the ceramic body and the metal housing. The material of this intermediate annular member is chosen so as to have a higher thermal coefficient of expansion than the ceramic body and metal housing being sealed, and is preferably an appropriate austenitic stainless steel. Thus, when the sealed area is heated, the intermediate annular member expands more than the ceramic body and the metal housing, thereby retaining the sealed area in compression and effectively sealing the ceramic body from entry of unwanted exhaust gases into its reference air chamber.

An advantageous feature of this invention is that the intermediate annular member facilitates the rigid securing and sealing of the solid electrolyte body within the metal housing, even over a wide range of temperatures. In addition, the means for accomplishing this improved seal are also compatible with current production techniques used for the assembly of this type of automotive oxygen sensor thereby maximizing the practicality of this design.

Other objects and advantages of this invention will be better appreciated from the following detailed description.

The above and other advantages of this invention will become more apparent from the following description taken in conjunction with the accompanying drawings, in which:

Figure 1 is a cross-sectional view of a solid electrolyte, electrochemical-type oxygen sensor and illustrates a solid electrolyte ceramic sensing element, metal housing and intermediate sealing means in accordance with a preferred embodiment of this invention;

Figure 2 is an enlarged cross-sectional view of the sealing means and a sealed region shown in Figure 1; and

Figure 3 illustrates the sealing means in accordance with a preferred embodiment of this invention.

This invention provides an improved means for sealing a solid electrolyte ceramic body within a metal housing, and is particularly suited for use in an electrochemical-type oxygen sensing device designed to detect the oxygen concentrations of automotive exhaust emitted from an internal combustion engine. The improved seal between the ceramic body and the metal housing retains its sealing integrity over a broad range of operating temperatures.

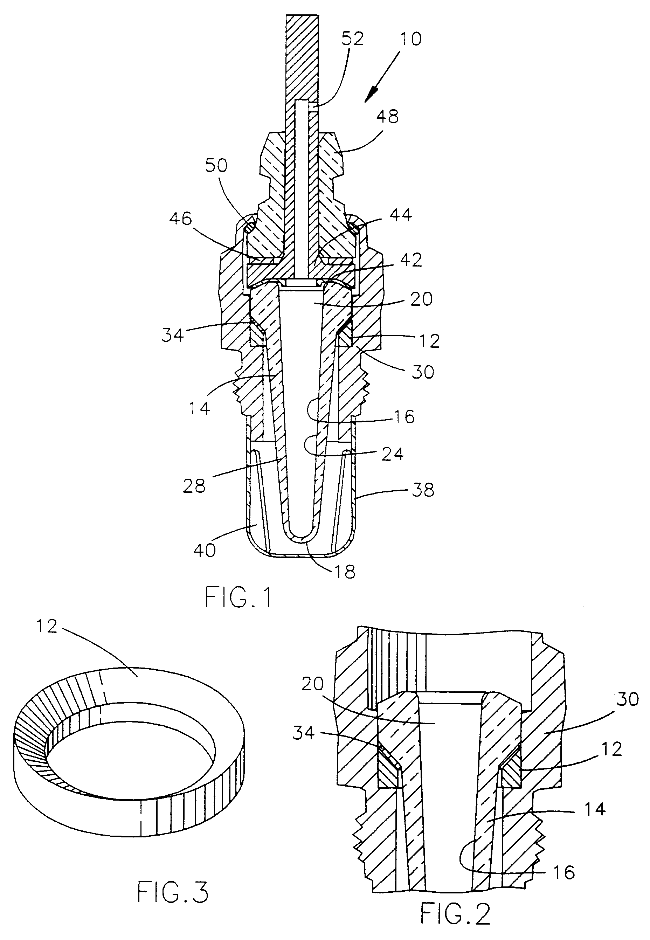

In the preferred embodiment of this invention, the oxygen sensing device 10, as shown cross-sectionally in Figure 1, comprises a preferred sealing means 12 for sealing a solid electrolyte ceramic body 14 within a metal housing 30. The oxygen sensing device 10 shown in Figure 1 is approximately 1.5 times the size of an actual oxygen sensing device used to detect automotive exhaust gases.

As stated previously, in a typical oxygen sensor of this type, the solid electrolyte ceramic body 14 is preferably formed from yttria-stabilized zirconia because of its good ionic and electronic conductivity, proven durability and availability, although other suitable electrically and ionically-conductive materials may also be used. The solid electrolyte body 14 is a substantially tubular body having an elongated bore 16 therein located axially. A first end 18 of the solid electrolyte body 14 is closed by the solid electrolyte material. A second end 20 of the solid electrolyte body 14 is open.

A reference electrode (not shown) is provided on an inner surface 24 of the solid electrolyte body 14 in the elongated bore 16. The reference electrode is preferably formed from an extremely thin layer of porous platinum. Porous platinum is chosen because of its high surface area, good catalytic properties and relatively low cost as compared to the other noble metal catalyst materials, although other suitable electrically-conductive surfaces may also be used such as porous gold or palladium. The reference electrode contacts a known concentration of a reference gas. Air is generally always used as the reference gas since it is readily available and can be easily introduced into the elongated bore 16 of the solid electrolyte body 14. Other gases may also be used, however extraordinary and impractical plumbing features would be required to introduce the gas into the elongated bore 16, so as to contact the reference electrode.

For the proper functioning of the oxygen sensor 10, it is imperative that the reference electrode be exposed only to the reference gas. Therefore the elongated bore 16 of the solid electrolyte body 14 must be isolated to prevent leakage of the external gases into the elongated bore 16. The sealing means 12 of this invention readily provides the required gas-tight seal, as will be explained subsequently in full detail.

A measuring electrode (not shown), also preferably formed from an extremely thin layer of the porous platinum for the same reasons given above is provided on an outer surface 28 of the solid electrolyte body 14. However again other suitable electrically-conductive, catalytic, surfaces may also be used. The measuring electrode contacts the exhaust gas for which the oxygen concentration is to be measured. The oxygen partial pressure of the exhaust gas is measured by detecting the galvanic potential generated between the reference and measuring electrodes respectively. It is to be noted that typically the outer measuring electrode, or at least that portion which is exposed to the exhaust gases, is also covered by a thin layer of a protective coating (also not shown), typically a porous ceramic material, to shield the measuring electrode from foreign poisons or particles within the exhaust gas. Generally, the measuring electrode extends upwardly, and contacts an electrically-conductive metal gasket 34 which also contacts the housing 30. The housing is electrically connected so as to be at ground potential.

The housing 30 is adapted to fit into an exhaust pipe of an automobile, typically by the use of simple mounting plates. The housing 30 supports the solid electrolyte body 14 so that the measuring electrode on the outer surface 28 of the solid electrolyte body 14 contacts the external exhaust gas to be measured, whilst the reference electrode on the inner surface 24 of the solid electrolyte body 14 is gas-tight to the external exhaust gas. The solid electrolyte body 14 is mounted to resemble a finger-like projection into the flow of exhaust gases. About one-half to one-third of the solid electrolyte body 14 projects outwardly and is exposed to the exhaust gases. The housing 30 may be formed from any high-strength, preferably corrosion-resistant material, such as a suitable ferritic or martensitic type stainless steel, as will be discussed more fully later.

The lower gasket 34, provided at the outer, angled wall of the solid electrolyte body 14, helps to seals the solid electrolyte body 14 in that region between the solid electrolyte body 14 and the housing 30 (where the inventive sealing means 12 of this invention is also provided), and prevents flow of the external exhaust gas into the elongated bore 16 of the solid electrolyte body 14 where the reference electrode is provided. The purpose of this lower gasket 34 is to deform during assembly of the sensor 10, so as to fill any irregularities between the solid electrolyte body 14 and the housing 30.

With the preferred sealing means 12 of this invention, this lower gasket 34 is not strictly necessary. However, although the lower gasket 34 does not provide an absolute seal from leakage of external exhaust gases, particularly when exposed to a broad range of temperatures, the use of the lower gasket 34 is preferred since it fills the surface imperfections between the mated solid electrolyte body 14 and housing 30.

A perforated shield 38 is also preferably attached to the housing 30 for protection of the solid electrolyte body 14 during assembly and use. A gap 40 is provided between the perforated shield 38 and solid electrolyte body 14 at the sensing region of the solid electrolyte body 14 to allow uninterrupted flow of the exhaust gases through the perforated shield 38 to the porous platinum measuring electrode on the outer surface 28 of the solid electrolyte body 14.

A terminal post 44 is provided which rigidly secures and centres the solid electrolyte body 14 within the housing 30, whilst also electrically coupling the galvanic output signal generated between the reference electrode 22 and the measuring electrode 26 to an external electronic signal wire (not shown) which is electrically connected to external diagnostic equipment. As shown, the terminal post 44 is a substantially tubular shape and has an outwardly-flared region which is shaped generally to match the top surface of the solid electrolyte body 14. A formed washer 42 is disposed between the outwardly-flared region of the terminal post 44 and solid electrolyte body 14, so as to provide matched, mating surfaces between the top end of the solid electrolyte body 14 and the terminal post 44 thereby further enhancing a complete seal between the two components to prevent any leakage of exhaust gases into the elongated bore 16 of the solid electrolyte body 14. Also, the inner diameter of the formed washer 42 is matched to the open end 20 of the solid electrolyte body 14, so as to electrically contact the interior reference electrode of the solid electrolyte body 14 when inserted within the solid electrolyte body 14. (The electrical signal from the reference electrode is then communicated to external diagnostic equipment).

The terminal post 44 is generally formed from a suitable electrically-conductive material, such as an appropriate stainless steel, because of its electrical-conductivity, high strength, and good corrosion resistance, however other electrically conductive, strong materials may also be used. Good corrosion resistance for these various materials is desirable since the sensor 10 is exposed to the hot, corrosive internal combustion engine exhaust gases, which may reach temperatures as high as about 500°C.

The outwardly-flared region of the terminal post 44 is essentially perpendicular to the tubular portion of the solid electrolyte body 14. It is important that this outwardly-flared region be generally flat and perpendicular to the tubular portion of the terminal post 44 for alignment purposes during assembly of the sensor 10. The flat surface of the outwardly-flared region of the terminal post 44 provides a seat for subsequently inserted components.

The terminal post 44 is surrounded by a ceramic insulator 48, which is generally formed from a dielectric material like alumina because of its physical characteristics and practical considerations. The ceramic insulator 48 is required to prevent electrical shorting between the electrically-conductive housing 30 and terminal post 44, which electrically conducts the galvanic signals generated by the reference and measuring electrodes to external diagnostic equipment via electrical signal wires. In practice, the electrical signal wires would be attached to the end of the terminal post 44 which is extending out from the ceramic insulator 48.

A washer 46 is disposed between the flat surface of the outwardly-flared region of the terminal post 44 and the ceramic insulator 48. This washer 46 is typically characterized by being generally of the convoluted "spring" type, so as to compensate for any dimensional differences of the components that arise during the assembly and use of the sensor 10, particularly as the sensor 10 is exposed to various temperatures. The dimensional differences generally arise because of the diverse materials used within the sensor 10 and their different coefficients of thermal expansion. The sealing means 12 of this invention alleviates this problem.

A sealing washer 50 is provided between the ceramic insulator 48 and the metal housing 30. This sealing washer 50 is shaped to resemble a ring and facilitates the subsequent crimping of the top end of the housing 30. The sealing washer is preferred but not necessary.

Reference air is admitted into the reference chamber 16 of the solid electrolyte body 14 typically through one or more holes 52 which may be provided in the straight, extended portion of the terminal post 44, or elsewhere depending upon the particular design of the oxygen sensor.

To better appreciate the advantages of this invention, the assembly procedure for the sensor 10 is generally described as follows. During assembly of the sensor 10, a terminal post sub-assembly consisting of the terminal post 44, washer 46, ceramic insulator 48 and sealing washer 50, is inserted within the extended, open end of the housing 30. The extended, open end of the housing 30 is shown more clearly in Figure 2 and allows entry by the terminal post sub-assembly. The terminal post 44 aligns with the formed washer 42 provided on the top surface of, and within, the open end 20 of the solid electrolyte body 14. The terminal post 44 rigidly retains the solid electrolyte body 14 downwardly against the sealing means 12 of this invention (with gasket 34 provided therebetween) and concurrently against the angled seat of the housing 30. The solid electrolyte body 14 is rigidly held within the housing 30 by the friction fit generated at its outer diameter between itself 14 and the housing 30.

After insertion of the terminal post sub-assembly, the extended, open end of the housing 30 is rolled inwardly at room temperature using conventional means to retain the components within the housing 30. After this "cold" crimping step, the components are compressively loaded and further "hot" crimped at an elevated temperature. This is accomplished by concurrently passing a sufficiently large electrical current through the housing 30 to resistively heat the housing 30 whilst applying a sufficiently large compressive force to the sensor 10. The compressive force is applied until the housing 30 cools. This "hot" rolling of the already "cold" rolled end of the housing 30, under pressure, ensures that the components are rigidly retained within the housing 30.

The inventive portion, in particular the sealing means 12, is now described. According to a preferred aspect of this invention the sealing means 12 provides an improved seal between the solid electrolyte ceramic body 14 and the metal housing 30. The sealing means 12 retains the solid electrolyte body 14 within the housing 30 whilst also sealing the interior of the solid electrolyte body 14 at its open end 20 from the exhaust gases. The solid electrolyte body 14 is held within the housing 30 by the downward force exerted against the sealing means 12 upon insertion of the solid electrolyte body 14 within the housing 30.

As shown in Figure 3, the sealing means 12 of this invention is basically a relatively thick, but relatively short annular member. The sealing means 12 is provided between the solid electrolyte ceramic body 14 and the metal housing 30 at the angled seat of the housing 30 along its (30) inner diameter, as shown more closely in Figure 2. The sealing means 12 contacts the lower gasket 34 if the lower gasket 34 is provided. The diameters of the sealing means 12 will depend upon the outer diameter of the solid electrolyte body 14 and the inner diameter of the housing 30, as illustrated in Figures 1 and 2. The length of the annular sealing means 12 will depend upon the corresponding length of the recessed area within the housing 30 which contacts the solid electrolyte body 14. Of the length of that recessed area, approximately half will be contacted by the solid electrolyte body 14 while the other half will be contacted by the annular contact means 12. This ratio appears to optimize the stability of the components during use, although the various lengths may vary with no foreseeable detrimental results to this invention. In addition the walls of the annular sealing means 12 must be sufficiently thick, as shown, to have the strength to retain the compressive force against the solid electrolyte body 14 and housing 30 during exposure to temperature.

The sealing means 12 is formed from a material which is characterized by a higher thermal coefficient of expansion than the solid electrolyte ceramic body 14 and metal housing 30. Thus, when the sealed region is exposed to elevated temperatures during operation of the sensor 10, the sealing means 12 expands at a greater rate than the solid electrolyte ceramic body 14 or the metal housing 30, thereby forcing these components (14 and 30) to remain in compression. Through this mechanism, the sealing means 12 effectively seals the solid electrolyte ceramic body 14 from entry of unwanted exhaust gases into the reference air chamber 16 over a broad range of temperatures.

In particular, in the preferred embodiment, the preferred sealing means 12 is formed from an appropriate austenitic-type stainless steel which has a coefficient of thermal expansion greater than the coefficient of thermal expansion of the material for the housing 30 or the solid electrolyte ceramic body 14. The austenitic-type stainless steels are generally characterized by the highest coefficients of thermal expansion as compared to the other types of stainless steels and are therefore preferred, as well as good corrosion resistance coupled with excellent toughness over a broad range of temperatures. The housing 30 is formed from a high-strength, stainless steel, such as a suitable AISI 400 series ferritic iron-chromium stainless steel material. (AISI is the standard material designation given by the American Iron and Steel Institute.) The ferritic stainless steels are generally characterized by good corrosion resistance coupled over a broad range of temperatures and are therefore preferred.

The specific materials and coefficients of thermal expansion for the housing 30, the solid electrolyte ceramic body 14 and the sealing means 12 are as follows.

The housing 30 is preferably formed from the ferritic stainless steels having the standard designations AISI 409 and AISI 430, (or their equivalents). The materials are characterized by similar properties, therefore one is not necessarily preferred over another. In addition, it is foreseeable that other ferritic stainless steels could also be used. The AISI 409 and AISI 430 materials are characterized by a mean coefficient of thermal expansion ranging between about 10.44 to 11.7 X $10^{-6}$ cm/cm-°C (5.8 to 6.5 X $10^{-6}$ inch/inch-°F) over a temperature range of between about 0°C (32°F) and about 100°C (212°F); a yield strength as measured at about 21°C (70°F) of about 206842.8 kPa (30,000 pounds per square inch (psi)); and a tensile strength as measured at about 21°C (70°F) of between about 379211.8 and 448159.4 kPa ( 55,000 and 65,000 psi).

The chemical compositions of both materials are similar and listed below in Table I. The percentages given below are weight percents.

TABLE I

| AISI | C | Mn | P | S | Si | Cr | Mo |
|------|------|------|-------|-------|------|-----------|-------|
| 409 | 0.08* | 1.0* | 0.03* | 0.03* | 1.0* | 11.5-14.5 | - |
| 430 | 0.12* | 1.0* | 0.04* | 0.03* | 1.0* | 16-18 | 0.6* |

\* Denotes maximum concentration of the element.

As mentioned previously, the ceramic solid electrolyte body 14 is preferably formed from commercially-available yttria-stabilized zirconia material because of its proven success in the oxygen sensing environment. The coefficient of thermal expansion for this ceramic material is significantly lower than the coefficient of thermal expansion for the metal components. In particular, the coefficient of thermal expansion for yttria-stabilized zirconia is approximately $7.2 \times 10^{-6}$ cm/cm-°C ($4 \times 10^{-6}$ inch/inch-°F) over a temperature range of between about room temperature and about 100°C (212°F). In practice, any of the solid electrolyte ceramic materials which are ionically and electrically conductive, as is required for the sensing element 14 in an oxygen sensor 10, will be characterized by a sufficiently low coefficient of thermal expansion. Foreseeably, any of these types of materials would be characterized by a coefficient of thermal expansion not greater than about $9 \times 10^{-6}$ cm/cm-°C ($5 \times 10^{-6}$ inch/inch-°F) and would be suitable for use in the preferred embodiment.

The sealing means 12 of this invention is therefore preferably formed from an austenitic stainless steel having a coefficient of thermal expansion greater than the housing 30 ($10.8 \times 10^{-6}$ cm/cm-°C (about $6 \times 10^{-6}$ inch/inch-°F)) and the ceramic solid electrolyte body 14 ($9 \times 10^{-6}$ cm/cm-°C (about $4 \times 10^{-6}$ inch/inch-°F)). Suitable materials would include AISI 301, AISI 302, AISI 303 and AISI 304, as well as the other austenitic-type stainless steels. Again, these materials are characterized by similar properties, therefore one is not necessarily preferred over another. These materials are all characterized by a mean coefficient of thermal expansion ranging between about 16.92 to $17.28 \times 10^{-6}$ cm/cm-°C (9.4 to $9.6 \times 10^{-6}$ inch/inch-°F) over a temperature range of between about 0°C (32°F) and 100°C (212°F); a yield strength as measured at about 21°C (70°F) of between about 206842.8 to 241316.6 kPa (30,000 to 35,000 psi); and a tensile strength as measured at about 21°C (70°F) of between about 517107 and 586054.6 kPa (75,000 and 85,000 psi). It is also foreseeable that other austenitic grades of stainless steel having a coefficient of thermal expansion as low as about $14.4 \times 10^{-6}$ cm/cm-°C ($8 \times 10^{-6}$ inch/inch-°F) could be used in this invention. The chemical compositions of the four materials are similar and listed below in Table II. The percentages given below are weight percents.

TABLE II

| AISI | C | Mn | P | S | Si | Cr | Ni | Mo |
|------|-------|------|--------|-------|------|-------|--------|------|
| 301 | 0.15* | 2.0* | 0.045* | 0.03* | 1.0* | 16-18 | 6-8 | - |
| 302 | 0.15* | 2.0* | 0.045* | 0.03* | 1.0* | 17-19 | 8-10 | - |
| 303 | 0.15* | 2.0* | 0.2)* | 0.03* | 1.0* | 17-19 | 8-10 | 0.6* |
| 304 | 0.08* | 2.0* | 0.045* | 0.03* | 1.0* | 18-20 | 8-10.5 | - |

\* Denotes maximum concentration of the element.

As stated previously and as shown most clearly in Figure 2, the sealing means 12 is provided between the solid electrolyte ceramic body 14 and the metal housing 30 in the region adjacent to the angled seat of the housing 30 along its inner periphery. The sealing means 12 contacts the lower gasket 34 (if the gasket 34 is provided). Because the sealing means 12 is formed from a material which is characterized by a higher coefficient of thermal expansion than the solid electrolyte ceramic body 14 and metal housing 30, the sealing means 12 expands at a greater rate than the solid electrolyte ceramic body 14 or the metal housing 30 during exposure to elevated temperature. By the greater expansion of the sealing means 12, the solid electrolyte body 14 is rigidly held within the housing 30 and the components are forced to remain in compression. Through this mechanism, the sealing means 12 effectively retains the seal between the solid electrolyte body 14 and the housing 30 over a wide range of temperatures, and seals the interior air reference chamber 16 of the solid electrolyte body 14 from entry of unwanted exhaust gases. An advantageous feature of this invention is that the sealing means 12 facilitates the rigid securing and sealing of the solid electrolyte body 14 within the metal housing 30, even over a wide range of temperatures. This seal effectively maintains its integrity over the extreme range of temperatures experienced within an automotive environment. In addition, the sealing means 12 for accomplishing this improved seal is also compatible with current production techniques used for the assembly of this type of automotive oxygen sensor, thereby maximizing the practicality of this design. Therefore, whilst the invention has been described in terms of a preferred embodiment, it is apparent that other forms could be adopted by one skilled in the art. Certainly the materials of the sealing means, housing, and solid electrolyte ceramic body could be appropriately modified yet resulting in the same relationship between their coefficients of thermal expansion. Alternatively, any of the preferred materials could be substituted within an individual component, or a hollow sealing means provided, or the various other components of the oxygen sensor modified. Lastly, it is foreseeable that the teachings of this invention could be readily employed in another environment wherein a ceramic part must be sealed and retained within a metal part, such as in a spark plug.

Accordingly, the scope of our invention is to be limited only by the scope of the following claims.

**Claims**

1. An oxygen sensing device (10) having a solid electrolyte ceramic body (14) and a metal housing (30), said solid electrolyte ceramic body (14) being substantially tubular with an elongated bore (16) located axially, and a first end (18) closed by said solid electrolyte ceramic material and a second end (20) open, said solid electrolyte ceramic body (14) having a reference electrode provided on an inner surface (24) thereof and a measuring electrode provided on an outer surface (28) thereof, the galvanic output signal generated between said reference electrode and said measuring electrode being determinable; and said solid electrolyte body (14) being axially disposed within said metal housing (30) so that said measuring electrode of said solid electrolyte body (14) contacts the external gas to be measured and so that said reference electrode of said solid electrolyte body (14) contacts an appropriate reference gas within said elongated bore (16); characterized in that said solid electrolyte body (14) has a first coefficient of thermal expansion; said metal housing (30) has a second coefficient of thermal expansion which is greater than said first coefficient of thermal expansion; and the oxygen sensing device (10) includes sealing means (12) for compressively retaining and sealing said solid electrolyte ceramic body (14) within said metal housing (30) at elevated temperatures, said sealing means (12) having a third coefficient of thermal expansion which is greater than said first and second coefficients of thermal expansion, said sealing means (12) being substantially annular, and being provided around and adjacent to said open end (20) of said solid electrolyte ceramic body (14), between said solid electrolyte ceramic body (14) and said metal housing (30) such that, upon exposure to elevated temperatures, the rate of expansion of said sealing means (12) is greater than the corresponding rate of expansion of said solid electrolyte ceramic body (14) or said metal housing (30), thereby being effective to compressively seal said solid electrolyte ceramic body (14) within said metal housing (30) so that said elongated bore (16) of said solid electrolyte ceramic body (14) is essentially gas-tight to the external gas to be measured.

2. An oxygen sensing device (10) according to claim 1, in which said solid electrolyte body (14) is formed from yttria-stabilized zirconia and said reference and measuring electrodes comprise platinum.

3. An oxygen sensing device (10) according to claim 1, in which said housing (30) is formed from a material characterized by a coefficient of thermal expansion less than 14.4 X $10^{-6}$ cm/cm-$°$C (8 X $10^{-6}$ inch/inch-$°$F).

4. An oxygen sensing device (10) according to claim 1, in which said sealing means (12) is formed from a material characterized by a coefficient of thermal expansion which is greater than 14.4 X $10^{-6}$ cm/cm-$°$C (8 X $10^{-6}$ inch/inch-$°$F).

5. An oxygen sensing device (10) according to claim 3, in which said housing (30) is formed from a ferritic-type stainless steel.

6. An oxygen sensing device (10) according to claim 4, in which said sealing means (12) is formed from an austenitic-type stainless steel.

7. An oxygen sensing device (10) according to claim 1, in which the solid electrolyte ceramic body (14) is a yttria-stabilized zirconia body; the metal housing (30) is formed from a ferritic stainless steel characterized by a coefficient of thermal expansion less than $14.4 \times 10^{-6}$ cm/cm-°C ($8 \times 10^{-6}$ inch/inch-°F);and the sealing means (12) is formed from an austenitic stainless steel characterized by a coefficient of thermal expansion which is greater than $14.4 \times 10^{-6}$ cm/cm-°C ($8 \times 10^{-6}$ inch/inch-°F).

8. An oxygen sensing device (10) according to claim 7, in which said housing (30) is formed from a ferritic stainless steel chosen from the group of materials consisting of AISI 409 and AISI 430.

9. An oxygen sensing device (10) according to claim 7, in which said sealing means (12) is formed from an austenitic stainless steel chosen from the group of materials consisting of AISI 301, AISI 302, AISI 303 and AISI 304.

FIG.1

FIG.3

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 057 477 (H. WEYL)<br>* abstract *<br>* column 3, line 34 - column 5, line 20 *<br>--- | 1-2,5-7 | G01N27/406 |
| Y | PATENT ABSTRACTS OF JAPAN<br>vol. 6, no. 166 (P-138)(1044) 31 August 1982<br>& JP-A-57 082 762 ( NGK SPARK PLUG ) 24 May 1982<br>* abstract *<br>--- | 1-2,5-7 | |
| D,A | US-A-3 844 920 (R.R. BURGETT)<br>* column 3, line 1 - line 31 *<br>--- | 1-2 | |
| A | EP-A-0 229 945 (INTERATOM)<br>* claims *<br>--- | 1-2 | |
| A | US-A-4 944 861 (E.J. REBER)<br>* abstract *<br>--- | 1-2 | |
| A | US-A-4 569 748 (M. YAMAKAWA)<br>* abstract *<br>--- | 1 | |
| A | US-A-4 526 672 (L.T. REED)<br>* abstract *<br>----- | 1 | TECHNICAL FIELDS SEARCHED (Int. Cl.5)<br><br>G01N |

The present search report has been drawn up for all claims

| Place of search | Date of completion of the search | Examiner |
|---|---|---|
| THE HAGUE | 02 SEPTEMBER 1992 | CALLEWAERT H.M. |